# EUROPÄISCHE PATENTSCHRIFT

(11) **EP 1 358 736 B1**
(45) Veröffentlichungstag und Bekanntmachung des Hinweises auf die Patenterteilung: **28.04.2010**
(21) Anmeldenummer: 02708220.5
(22) Anmeldetag: 07.02.2002
(51) Int. Cl.: H04W 12/02

(54) **VERFAHREN ZUR DURCHFÜHRUNG VON ÜBERWACHUNGSMASSNAHMEN IN PAKETORIENTIERTEN TELEKOMMUNIKATIONS- UND DATENNENTZEN**
METHOD FOR CARRYING OUT MONITORING IN PACKET-ORIENTED TELECOMMUNICATION AND DATA NETWORKS
PROCEDE POUR METTRE EN OEUVRE DES MESURES DE SURVEILLANCE DANS DES RESEAUX DE TELECOMMUNICATION ET DE DONNEES A COMMUTATION PAR PAQUETS

(30) Priorität: 09.02.2001 DE 10106351
(43) Veröffentlichungstag der Anmeldung: 05.11.2003
(73) Patentinhaber: T-Mobile Deutschland GmbH, 53227 Bonn (DE)
(72) Erfinder: KELLER, Walter, 40880 Ratingen (DE)
(74) Vertreter: Riebling, Peter
(86) Internationale Anmeldenummer: PCT/DE2002/000442
(87) Internationale Veröffentlichungsnummer: WO 2002/065703

(56) Entgegenhaltungen:
- WO-A-99/27716
- US-A- 6 131 032

## Beschreibung

Die Erfindung betrifft ein Verfahren zur Durchführung von Überwachungsmaßnahmen in paketorientierten Telekommunikations- und Datennetzen.

Die prinzipielle Verfahrensweise zur Durchführung von Teilnehmer-Überwachungsmaßnahmen in Telekommunikationsnetzen ist in ETSI GSM 03.33 (Tdoc SMG10 98 D047) beschrieben. In der Bundesrepublik Deutschland erfolgt die Überwachung von Telekommunikationsdiensten gemäß den geltenden gesetzlichen Bestimmungen.
Paketorientierte Telekommunikationsnetze sind beispielsweise zellulare Mobilfunknetze nach dem GSM-Standard mit GPRS-Übertragungsverfahren (ETSI GSM 03.60). Im Gegensatz zu leitungsvermittelten Diensten werden hierbei die einzelnen Datenpakete mit TCP/IP-Protokoll (gemäß Internet Engineering Task Force IETF-Standard RFC 793/RFC 791) einzeln im Netz übertragen, so dass die übliche Zuordnung zwischen Datenübertragungskanal und Kommunikationsteilnehmer nicht gegeben ist.
Das gleiche Verfahren wird im öffentlichen Internet angewandt. Es ergeben sich dort die gleichen Probleme.

Bei der Durchführung von gesetzlichen Überwachungsmaßnahmen stößt man bei dieser Übertragungsart auf besondere Probleme. Die Übertragungskanäle werden von vielen unterschiedlichen Kunden mit jeweils relativ kurzen Datenpaketen genutzt.

Bei der Durchführung von Überwachungsmaßnahmen müssen daher alle Datenpakete mit einer Liste der aktiv zu überwachenden Teilnehmer verglichen werden, um diejenigen Pakete herauszufiltern (zu kopieren), die den zu überwachenden Teilnehmern in Sende- oder Empfangsrichtung zuzuordnen sind.

Der technische Aufwand steigt demgemäß mit zunehmender Bandbreite (mehr Pakete pro Zeiteinheit) sowie mit der Anzahl der Überwachungsfälle an (längere Liste, die bei jedem Paket zu verifizieren ist).
Die an der Vermittlung beteiligten Komponenten (Vermittlungsknoten, Router, Gateways etc) sind mit Mikroprozessor-Systemen ausgestattet und werden durch die technischen Überwachungsaufgaben in ihrer Vermittlungsleistung ganz erheblich beeinträchtigt. Dies schlägt sich in den Kosten nieder, denn mit zunehmenden Überwachungsaufgaben müssen mehr und leistungsfähigere Komponenten installiert werden, als dies für die reinen Vermittlungsaufgaben der Fall wäre.

Da die Überwachungsaufgaben zu den gesetzlichen Anforderungen zählen, müssen diese Leistungen von den Netzbetreibern erbracht und finanziell selbst getragen werden.
Es wäre daher von großem kommerziellen Vorteil, wenn der Prozessoraufwand, der in Vermittlungsknoten für die gesetzlichen Überwachungsaufgaben (Lawful Interception) zur Verfügung gestellt werden muss, reduziert werden könnte.

Der vorliegenden Erfindung liegt die Aufgabe zugrunde, ein Verfahren vorzuschlagen, auf dessen Basis eine Reduktion des Berechnungs-Aufwandes (Prozessoren, Speicher, Systeme) realisierbar ist, die zur Durchführung der gesetzlichen Überwachungsmaßnahmen für Kommunikationsteilnehmer in paketorientierten Telekommunikations- und Datennetzen erforderlich ist, um damit Hardware und Investitionen zu sparen.

Gelöst wird diese Aufgabe durch die kennzeichnenden Merkmale des Patentanspruchs 1.

Nachfolgen wird die Erfindung anhand einer mögliche Ausführungsart am Beispiel des GPRS-Dienstes in GSM-Netzes in schematischer Darstellung eines Ausführungsbeispiels unter Bezugnahme der Zeichnungen beschrieben. Aus den Zeichnungen und ihren Beschreibung ergeben sich weitere Merkmale und Vorteile der Erfindung.

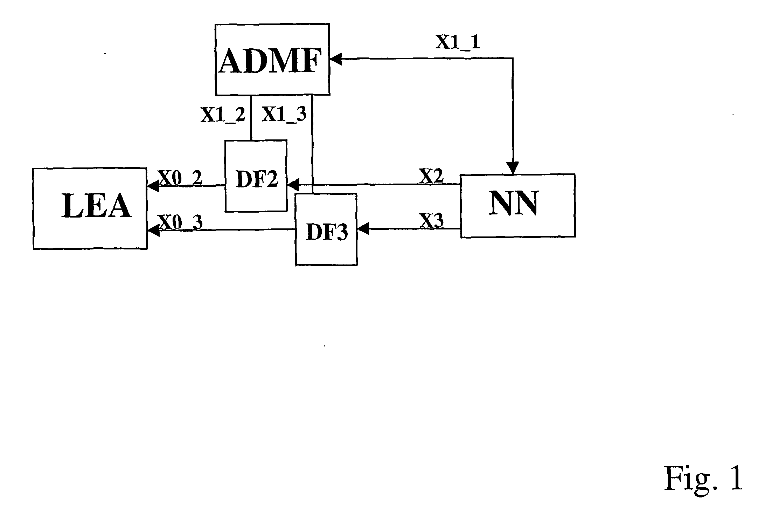

Fig. 1 zeigt die allgemeine Verfahrensweise zur Überwachung von Teilnehmeranschlüssen im Mobilfunk-Bereich (ETSI GSM 03.33) gemäß dem Stand der Technik.

Die Überwachungsmaßnahmen werden im ADMF administriert. Dort wird insbesondere eine Liste der Subscriber (Teilnehmerrufnummern) gepflegt, die der Maßnahme jeweils aktuell unterliegen. Diese Teilnehmerdaten werden in Form der Rufnummern (Im GSM-Netz die IMSI oder MSISDN) zu den Netzknoten übertragen, wobei jeder Netzknoten wünschenswerter Weise alle Rufnummern erhält, da der Administrator keine Datenpflege gemäß dem Bewegungsprofil der Endgeräte im Netz nachhalten kann.

Bei Datenknoten kann es dabei zu den beschriebenen Performance-Problemen kommen.

Alternativ zur IMSI/MSISDN können bei anderen Datennetzen, beispielsweise dem Internet, andere Subscriber-Kennungen wie beispielsweise die TCP-Adresse (optional in Kombination mit der IP-Port-Nummer) verwendet werden.

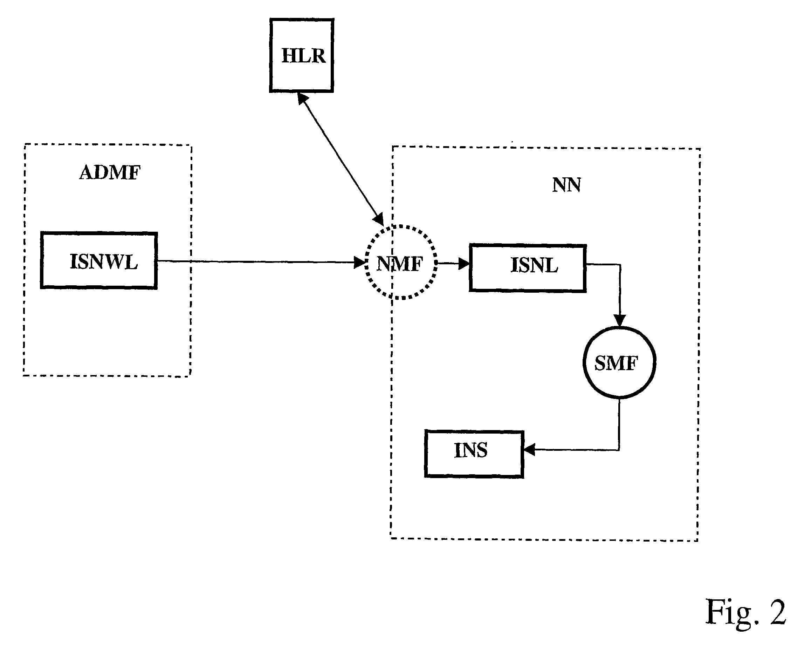

Fig. 2 zeigt eine erfindungsgemäße Verfahrensweise zur Behebung der Nachteile. Das zentrale ADMF enthält die Gesamtliste aller aktiven Überwachungsmaßnahmen im Netz (Interception Subscriber Network List ISNWL). Diese Daten werden zusammenhängend oder alternativ als Einzeldaten zum Vermittlungsknoten (Network Node NN) des Paketdatennetzes geliefert. Eine optionale Filterfunktion (Network Management Function NMF) dient dabei zur Reduktion des Umfanges der Liste. Die NMF ist vorzugsweise Bestandteil des NN, oder eine dedizierte Einrichtung, die für mehrere NNs zuständig ist. Sie steht mit dem Netzknoten und bedarfsweise anderen Netzeinrichtungen, wie beispielsweise dem Home Location Register (HLR) in Verbindung, um Kriterien für eine automatische Redunktion der Liste zu erfassen.

Ein geeignetes Kriterium liegt beispielsweise vor, wenn der betreffende Kunde den in der NN gebotenen Dienst aufgrund seiner technischen Einrichtungen (kein Datenendgerät o.ä) oder aufgrund der Vertragslage (keine Nutzungsberechtigung für Datendienste), aufgrund der Verkehrsbeziehung (derzeit kein Datenverkehr/kein Kontext) oder anderer Kriterien nicht nutzen kann. Ein weiterer Grund kann vorliegen, wenn sich der Kunde aktuell in einem anderen Netzbereich aufhält, so dass sein Datenverkehr für den vorliegenden Netzknoten nicht relevant ist.

Mit diesen und ähnlichen Parametern kann die ISNLW reduziert werden. Die verbleibenden Daten werden als Interception Subscriber Node List (ISNL) im Netzknoten in Form einer Datenbank oder in Form einer Speichertabelle hinterlegt und jeweils gemäß dem aktuellen Stand der ISNWL sowie optional sonstiger Netzinformationen bei einer Bearbeitung in der NMF aktualisiert.

Die verbleibende Liste kann vom Umfang her immer noch sehr lang sein, insbesondere wenn die optionale NMF nicht vorhanden ist. Hierzu wird ein alternatives oder zusätzliches Reduktionsverfahren verwendet (Interception Node Sublist INS).
Die Liste wird mittels der Filterfunktion (Sublist Management Function SMF) aus der ISNL bzw. alternativ der ISNLW erstellt.

Die Kriterien zur zweiten Reduktionsstufe sind durch die Statistik sowie durch die Leistungsfähigkeit des betreffenden Knoten gegeben. Die ISNWL gilt landesweit/netzweit. Statistisch gesehen kann innerhalb eines einzelnen Vermittlungsknoten nur die Teilnehmerzahl betroffen sein, die sich durch die Anzahl gleichartiger Knoten im Netz ermitteln läst.
Eine weitere Grenze ist durch die Rechnerkapazität im Netzknoten gegeben.

Hinzu kommt die statistische Gegebenheit, dass die Anzahl der Interception-Fälle gering sind im Vergleich zur Gesamtzahl der Teilnehmer. D.h. die Wahrscheinlichkeit, dass ein Datenpaket überhaupt gedoppelt werden muss, ist sehr gering.
Dies wiederum bedeutet, dass bei jedem Datenpaket mit hoher Wahrscheinlichkeit die gesamte Liste abgearbeitet werden muss, da die Wahrscheinlichkeit sehr gering ist, dass der Adressat des betreffenden Paketes überhaupt in der Liste gespeichert ist.
Wenn alle durchlaufenden Pakete jeweils hinsichtlich ihrer Adressen mit der kompletten netzweiten Interception-Liste verglichen werden müssen, kann hierzu die gesamte Rechenleistung erforderlich sein, so dass keinerlei Paket innerhalb der protokollseitig einzuhaltenden Timeout-Werte mehr übermittelt werden kann und somit der Verkehr zusammen bricht. Die Liste wird demnach in einer zweiten Stufe auf ein sinnvolles Maß an Eintragungen reduziert und diese ständig aktuell gepflegt.

Eintreffende Datenpakete werden nachfolgend nur noch im Adressteile mit der reduzierten Liste (hier der INS) verglichen. Ist der betreffende Adressat in der INS gelistet, müssen die Daten kopiert werden, ist dies nicht der Fall, kann mit sehr hoher Wahrscheinlichkeit davon ausgegangen werden, dass es sich nicht um ein zu überwachendes Datenpaket handelt.

### Abkürzungsverzeichnis:

- ADMF: Administration Function (Legal Interception Control Center)
- LEA: Law Enforcement Agenty (Bedarfsträger)
- DF2: Delivery Function 2 (Interception Related Information)
- DF3: Delivery Function 3 (Interception Data Product)
- NN: Network Node
- X: Schnittstelle
- ISNWL: Interception Subscriber Network List
- ISNL: Interception Subscriber Node List
- INS: Interception Node Sublist
- NMF: Node Management Function
- SMF: Lublist Management Function
- HLR: Home Location Register

## Patentansprüche

1. Verfahren zur Durchführung von Überwachungsmaßnahmen in paketorientierten Telekommunikations- und Datennetzen, wobei eine zentrale Administrationseinrichtung (ADMF) alle zu überwachenden Teilnehmeranschlüsse (Subscriber) verwaltet und unabhängig von der dienstespezifischen Nutzungsberechtigung des einzelnen Teilnehmeranschlusses, von der technischen Nutzungsmöglichkeit der Endgeräte, der geografischen Sinnhaftigkeit und weiteren Netzknoten- oder Teilnehmer-relevanten Eigenschaften, alle vorhandenen Überwachungsfälle Netzknoten-unabhängig an alle Paketdatenknoten (NN) des Telekommunikations- oder Datennetzes distributiert werden, so dass der zentrale Administrationsaufwand minimiert werden kann,
**dadurch gekennzeichnet, dass** Netzknoten-spezifisch jeweils eine Reduktion der netzweiten einheitlichen Überwachungsliste (ISNWL) zu einer individuellen Liste (ISNL) in der Art durchgeführt wird, dass Überwachungsteilnehmer, die zum aktuellen Zeitpunkt nicht im betreffenden Netzknoten (NN) kommunizieren können, automatisch von der Liste (ISNWL) gestrichen werden sowie eine weitere Reduktion, und/oder eine alternative Reduktion zu einer minimierten individuellen Liste zu observierender Teilnehmer (INS) durchgeführt wird, indem die maximalen statistischen Verkehrsbeziehungen innerhalb des Netzknotens (NN), die Anzahl gleichartiger Netzknoten im Gesamtnetz sowie die maximale Knotenperformance berücksichtigt werden und durch die reduzierte knotenindividuelle Liste (INS) der Bearbeitungsaufwand beim Adressvergleich eines jeden zu vermittelnden Datenpaketes mit der Überwachungsliste (ISNWL) minimiert wird.

2. Verfahren gemäß Anspruch 1, **dadurch gekennzeichnet, dass** eine netzknotenspezifische Reduktion der zentralen Überwachungsliste (ISNWL) mittels einer knotenspezifischen Filterfunktion (NMF) erzielt werden kann, wobei die Filterfunktion (NMF) in Verbindung mit Netzknoten-eigenen Datenbanken, bzw. vermittlungstechnischen Tabellen und/oder den relevanten Netzeinrichtungen steht, um automatisch solche Teilnehmer auf der zentralen Liste (ISNWL) zu erfassen, die aus vertragsrechtlichen, technischen, geografischen, mangels aktuellem Kontext oder sonstigen Gründen, aktuell keinerlei Verkehr im betreffenden Netzknoten (NN) erzeugen können und daher Netzknoten-spezifisch ohne Sicherheitsverlust von der Liste gestrichen werden können.

3. Verfahren gemäß Anspruch 1, **dadurch gekennzeichnet, dass** eine weitere optionale Reduktion von Eintragungen auf der zentralen Überwachungsliste (ISNWL), oder der bereits knotenindividuell reduzierten Liste (ISNL) erreicht werden kann, indem eine Filterfunktion (SMF) die statistischen Gegebenheiten im Netz sowie die Performance-Fähigkeit des betreffenden Knoten, in der Art berücksichtigt, dass eine verbleibende knotenspezifische Interception Liste (INS) entsteht, die zur Verifikation eines jeden durchlaufenden Datenpaketes verwendet wird.

4. Verfahren gemäß Anspruch 1 bis 3, **dadurch gekennzeichnet, dass** beim Vorhandensein einer Netzknoten-spezifischen Liste (INS), die durch die Selektion von Teilnehmern entstanden ist, welche ein aktives Verkehrsverhältnis besitzen in den Fällen, wenn zusätzliche Teilnehmer ebenfalls ein aktives Verkehrsverhältnis aufbauen diese Aktivierungsfälle mit der einheitlichen Überwachungsliste (ISNWL) verglichen werden.

5. Verfahren gemäß Ansprüche 1 bis 4, **dadurch gekennzeichnet, dass** die Filterfunktionen (NMF, SMF) fortlaufend in Betrieb sind, damit letztlich die knotenrelevante Liste (ISNL) oder (INS) stets aktuell ist.

## Claims

1. Method for carrying out supervisory measures in packet-oriented telecommunications and data networks, wherein a central administration function (ADMF) manages all subscriber connections to be supervised and, independently of the services-specific authorisation for use of the individual subscriber connection, the technical usage of terminals, the geographical rationality and other properties relevant to the network node or subscribers, all existing cases of supervision are distributed independently of the network node to all packet data nodes (NN) of the telecommunications or data network, so that the central administration costs can be minimised, **characterised in that**, in each case specifically to the network node, a reduction of the network-wide standard supervision list (ISNWL) to an individual list (ISNL) is carried out in such a way that supervision subscribers who are not communicating in the network node (NN) concerned at the current time are automatically deleted from the list (ISNWL), and a further reduction and/or alternative reduction to a minimised individual list of subscribers to be observed (INS) is carried out by taking into account the maximum statistical communications relations within the network node (NN), the number of identical network nodes in the whole network and the maximum node performance and, as a result of the reduced node-individual list (INS), minimising the processing costs in case of address comparison of each data packet to be switched with the supervision list (ISNWL).

2. Method according to claim 1, **characterised in that** a network node-specific reduction of the central supervision list (ISNWL) can be obtained by means of a node-specific filter function (NMF), the filter function (NMF) being connected to databases belonging to the network node or switching tables and/or the relevant network devices in order to detect automatically on the central list (ISNWL) such subscribers who, for reasons of contract law or for technical or geographical reasons or lack of current context or other reasons, cannot currently generate any communications in the network node (NN) concerned and therefore can be deleted from the list specifically to the network node without loss of security.

3. Method according to claim 1, **characterised in that** a further optional reduction of entries on the central supervision list (ISNWL) or the list which has already been reduced individually for the node (ISNL) can be achieved by the fact that a filter function (SMF) takes into account the statistical circumstances in the network as well as the performance capacity of the node concerned in such a way that a residual node-specific interception list (INS) is produced, which is used for verification of each data packet passing through.

4. Method according to claims 1 to 3, **characterised in that**, where there is a network node-specific list (INS) which was produced by the selection of subscribers who have an active communications relationship in the cases where additional subscribers are also establishing an active communications relationship, these activation cases are compared with the standard supervision list (ISNWL).

5. Method according to claims 1 to 4, **characterised in that** the filter functions (NMF, SMF) are continuously in operation so that ultimately the node-relevant list (ISNL) or (INS) is always up to date.

## Revendications

1. Procédé pour mettre en oeuvre des mesures de surveillance dans des réseaux de télécommunication et de données par paquets, selon lequel un dispositif de gestion central (ADMF) gère toutes les lignes d'abonné (Subscriber) à surveiller, et indépendamment de l'autorisation d'utilisation, propre au service, de la ligne d'abonné individuelle, de la position d'utilisation technique des terminaux, de la cohérence géographique et d'autres caractéristiques importantes pour le noeud de réseau ou l'abonné, tous les cas de surveillance existants sont distribués, indépendamment du noeud de réseau, à tous les noeuds de données par paquets (NN) du réseau de télécommunication ou de données, de sorte que la dépense de gestion centrale peut être minimalisée,
**caractérisé en ce que** spécifiquement pour chaque noeud de réseau une réduction de la liste de surveillance unique de réseau (ISNWL) à une liste individuelle (ISNL) est effectuée de telle sorte que les abonnés de surveillance qui ne peuvent pas communiquer dans le noeud de réseau concerné (NN) au moment présent sont automatiquement rayés de la liste (ISNWL), et une réduction supplémentaire et/ou une autre réduction à une liste individuelle minimale pour des abonnés observateurs (INS) est effectuée grâce au fait que les situations de trafic statistiques maximales à l'intérieur du noeud de réseau (NN), le nombre de noeuds de réseau de même type dans tout le réseau et la performance maximale de noeud sont pris en compte et grâce à la liste individuelle de réseau réduite (INS) la dépense de traitement est minimalisée lors de la comparaison d'adresses de chaque paquet de données à communiquer, avec la liste de surveillance (ISNWL).

2. Procédé selon la revendication 1, **caractérisé en ce qu'**une réduction, propre au noeud de réseau, de la liste de surveillance centrale (ISNWL) est obtenue à l'aide d'une fonction de filtrage propre au réseau (NMF), la fonction de filtrage (NMF) étant reliée à des banques de données propres au noeud de réseau ou à des tables techniques de commutation et/ou aux dispositifs de réseau importants, afin d'enregistrer automatiquement sur la liste centrale (ISNWL) les abonnés qui, pour des raisons contractuelles, techniques, géographiques, par manque de contexte actuel ou pour d'autres raisons, ne peuvent pas actuellement produire de trafic dans le noeud de réseau concerné (NN) et peuvent donc être rayés de la liste, spécifiquement pour le noeud de réseau, sans perte de sécurité.

3. Procédé selon la revendication 1, **caractérisé en ce qu'**une réduction optionnelle supplémentaire d'inscriptions sur la liste de surveillance centrale (ISNWL) ou sur la liste (ISNL) déjà réduite individuellement pour le réseau peut être obtenue grâce au fait qu'une fonction de filtrage (SMF) tient compte des conditions statistiques dans le réseau et de la capacité de performance du noeud concerné, de manière à former une liste d'interception restante propre au noeud (INS) qui est utilisée pour vérifier chaque paquet de données qui passe.

4. Procédé selon les revendications 1 à 3, **caractérisé en ce qu'**en présence d'une liste propre au noeud de réseau (INS) qui a été formée grâce à la sélection d'abonnés qui ont une situation de trafic active, dans les cas où des abonnés supplémentaires établissent aussi une situation de trafic active ces cas d'activation sont comparés à la liste de surveillance unique (ISNWL).

5. Procédé selon l'une des revendications 1 à 4, **caractérisé en ce que** les fonctions de filtrage (NMF, SMF) fonctionnent en continu pour que la liste importante pour les noeuds (ISNL) ou (INS) soit en fin de compte toujours d'actualité.
